# EUROPEAN PATENT SPECIFICATION

(11) **EP 1 257 004 B1**
(45) Date of publication and mention of the grant of the patent: **02.01.2004**
(21) Application number: 02252545.5
(22) Date of filing: 10.04.2002
(51) Int. Cl.: H01R 13/03

(54) **Metal article with multilayer coating**
Metallischer Gegenstand mit mehrlagigem Belag
Articjle métalique avec couverture multicouche

(30) Priority: 11.05.2001 US 853800
(43) Date of publication of application: 13.11.2002
(73) Proprietor: LUCENT TECHNOLOGIES INC., Murray Hill, New Jersey 07974-0636 (US)
(72) Inventor: Abys, Joseph Anthony, Warren, New Jersey 07059 (US); Fan, Chonglun, Bridgewater, New Jersey 08807 (US); Xu, Chen, New Providence, New Jersey 07974 (US); Zhang, Yun, Warren, New Jersey 07059 (US)
(74) Representative: Buckley, Christopher Simon Thirsk

(56) References cited:
- DE-A- 4 317 950
- US-A- 5 438 175
- US-A- 5 780 172

## Description

### FIELD OF THE INVENTION

This invention relates to metal articles coated for solderability and protection from corrosion. In particular, it concerns an article having a multilayer finish comprising a layer of tin or tin alloy and a metal outer layer to inhibit the growth of tin whiskers. The surface finish is especially useful for electrical connectors and integrated circuit lead frames.

### BACKGROUND OF THE INVENTION

High quality connectors are increasingly important in a wide variety of products including consumer electronics, household appliances, computers, automobiles, telecommunications, robotics and military equipment. Connectors provide the paths whereby electrical current flows from one device to another. Quality connectors should be highly conductive, corrosion resistant, wear resistant, readily connected by solder and inexpensive.

Unfortunately no single material has all the desired characteristics. Copper and many of its alloys are highly conductive, but they are subject to corrosion in typical ambients, producing reactive oxides and sulfides. The reactive corrosion products reduce the conductivity of the connectors and the reliability of interconnection. The corrosion products also interfere with the formation and reliability of solder bonds and can migrate to other electronic components which they adversely affect.

Thin layers of tin have been applied to copper surfaces to provide corrosion resistance and solderability. Tin is easily applied, non-toxic, provides corrosion protection and has excellent solderability. Unfortunately tin coatings are subject to spontaneous growth of metallic filaments called tin "whiskers". These whiskers have been identified as a cause of short circuit failures in low voltage equipment. Moreover whisker fragments can detach and accumulate within device packages, causing shorts at locations remote from their origin and interfering with electromechanical operation. Accordingly, it would be advantageous to provide metal articles with whisker free coatings of tin.

### SUMMARY OF THE INVENTION

In accordance with the invention, a metal substrate is coated with a multilayer finish comprising a layer of tin or tin alloy and an outer metal layer. An optional metal underlayer may be disposed between the substrate and the tin. In an exemplary embodiment the metal substrate comprises copper alloy coated with a nickel underlayer, a layer of tin and an outer metal layer of palladium. The resulting structure is particularly useful as an electrical connector or lead frame.

### BRIEF SUMMARY OF THE DRAWINGS

The advantages, nature and various additional features of the invention will appear more fully upon consideration of the illustrative embodiments now to be described in detail in connection with the accompanying drawings:
Fig. 1 is a schematic cross section of a metal article coated in accordance with the invention;
Fig. 2 is a block diagram showing the steps involved in making the coated metal article of Fig. 1;
Fig. 3 shows a substrate for making an electrical connector using the process of Fig. 2;
Figs. 4A and 4B are photographs comparing the invention with a conventionally coated article; and
Fig. 5 shows a substrate for making an integrated circuit lead frame.

It is to be understood that these drawings are for purposes of illustrating the concepts of the invention and are not to scale.

### DETAILED DESCRIPTION

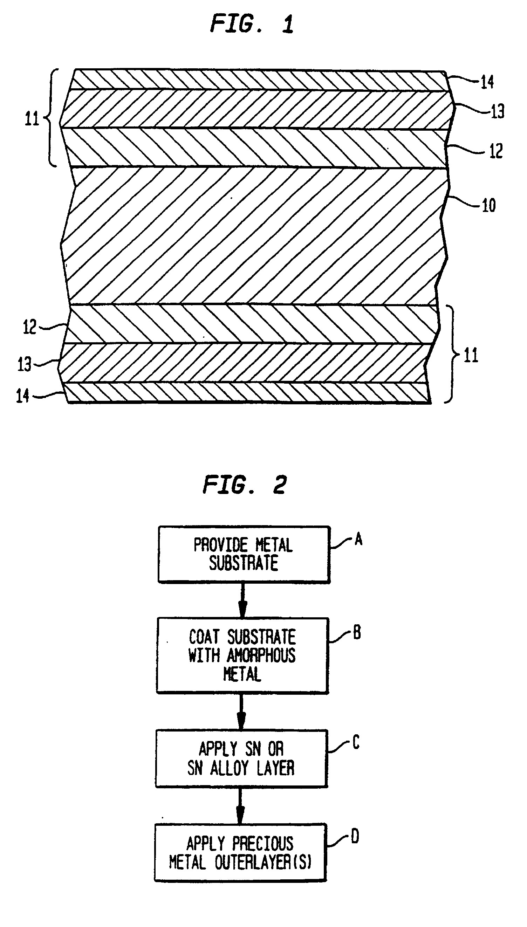

Fig. 1 is a schematic cross section of a metal substrate 10 coated with a multilayer finish 11 including, in ascending order from the substrate, an optional metal underlayer 12, an intermediate layer 13 of tin or a tin alloy subject to whisker formation and an outer metal layer 14 of metal for inhibiting whisker formation. The metal substrate is typically a conductive metal such as copper, copper alloy, iron or iron alloy subject to corrosion in typical ambients. The optional underlayer is advantageously a low porosity metal such as nickel, nickel alloy, cobalt or cobalt alloy. It is preferably an amorphous alloy. Nickel-phosphorus alloy with phosphorus ≥ about 10 wt % is satisfactory for substrates comprising copper or iron. Nickel-phosphorus-tungsten or colbalt-phosphorus can also be used. The intermediate layer 13 is tin or a tin alloy subject to whisker growth such as tin-copper, tin-bismuth, tin-silver, tin-nickel, tin-zinc or tin-copper-silver. The outer layer (or layers) 14 is of a metal or alloy which inhibits whisker formation. It can be palladium, rhodium, ruthenium, platinum, copper, silver, iridium, bismuth or an alloy of one or more of these metals. The optional underlayer 12 can have a thickness in the range of about 0 - 10 µm. The tin layer 13 typically has a thickness about 0.5 - 10 µm; and the outer metal layer 14 is preferably about 5 - 10,000 angstroms.

The invention can be understood more clearly by consideration of the following specific examples describing the fabrication of coated metal articles in accordance with the invention.

### Example 1 - Electrical Connector

Fig. 2 is a block diagram of the steps in making a coated metal electrical connector. The first step, shown in Block A, is to provide a metal substrate. The substrate can be formed into a desired configuration as by stamping or etching a metal blank.

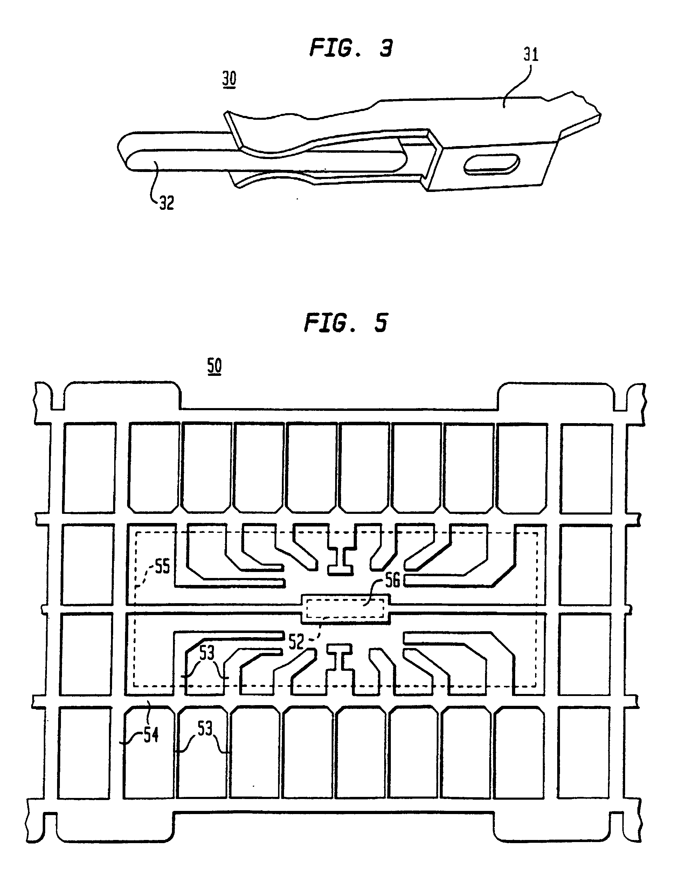

Fig. 3 illustrates a substrate for an electrical connector 30 having a connector body 31 and a mating pin 32. The connector 31 and the pin 32 are made of high conductivity metal such as copper-nickel-tin alloy No. 725 (88.2 wt. % Cu, 9.5 Ni, 2.3 Sn; ASTM Spec. No. B 122).

The next step, which is optional, is to coat the conductive substrate 11 with a metal underlayer 12 such as amorphous nickel-phosphorus. The underlayer 12 can have a thickness from 0 to about 5 µm. It can be electrodeposited Ni-P with P content higher than about 10 wt % to assure amorphous structure. A suitable Ni-P amorphous layer can be electrodeposited using the following bath composition:

| | | |
|---|---|---|
| Nickel sulfate | NiSO₄6H₂O | 100-300 g/l |
| Nickel chloride | NiCl₂6H₂O | 40-60 g/l |
| Phosphorous acid | H₃PO₃ | 40-100 g/l |
| Phosphoric acid | H₃PO₄ | 0-50 g/l |

The third step, Block C, is to apply a layer 13 of tin or tin alloy. The layer 13 should have a thickness greater than about 0.5 µm and is preferably about 7 µm. A suitable tin layer can be electrodeposited using the following bath:

| | |
|---|---|
| Tin methane sulfonate | 40-80 g/l |
| Methane sulfonic acid | 100-200 g/l |
| Wetting Agent 300 (Harcos Chemicals Inc.) | 5-15 g/l |
| Anti-Oxidant C 1 (Spectrum Laboratory Products) | 1-3 g/l |

The next step, shown in Block D, is to apply the outer metal layer 14 over the layer 13. Applicants have found that the proper choice of the outer metal layer will inhibit the growth of tin whiskers. The outer metal layer 14 is composed of a precious metal (palladium, iridium, rhodium, ruthenium, platinum or their alloys such as palladium-nickel or palladium-cobalt). It can also be copper, silver, bismuth or their alloys. The outer layer thickness is in the range about 5 - 10,000 angstroms. A suitable palladium layer can be deposited from the palladium electroplating solution described in United States Patent No. 4,911,799 issued on March 27, 1990 to J.A. Abys *et al*., which is incorporated herein by reference. A suitable palladium-nickel alloy with nickel content preferably 10 - 30 wt % can be deposited from the electroplating solution described in United States Patent No. 4,911,798 issued on March 27, 1990 to J.A. Abys *et al*., which is incorporated herein by reference. A suitable palladium-cobalt alloy can be deposited as described in United States Patent No. 5,976,344 issued to J.A. Abys *et al*. on November 2, 1999 which is incorporated herein by reference. Plating of rhodium, ruthenium and platinum are described in Metal Finishing, (Guidebook and Directory Issue), Vol. 97, No. 1 (January, 1999).

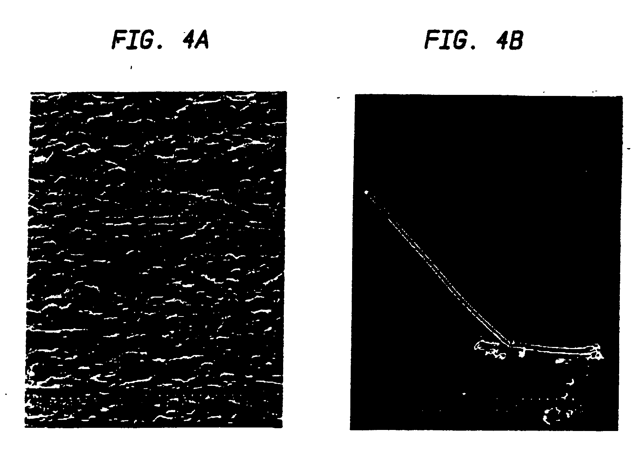

To test this new finish, applicants plated onto copper different finishes including tin layers and aged them at a temperature of -50° C. The aged surfaces were then inspected for whiskers using a scanning electron microscope (SEM) with high magnifications (up to 100,000 x). No whiskers were detected on the new finish after two months aging. Whiskers were found on the conventional nonovercoated tin finish. Fig. 4A is an SEM picture of the inventive finish after two months aging at 50° C. No whiskers are present. Fig. 4B is an SEM of a conventional nonovercoated tin finish. Whiskers are present.

### Example 2 - Integrated Circuit Lead Frame

An integrated circuit lead frame can also be fabricated by the process illustrated in Fig. 2. The only differences are that the substrate is different and the outer coating thickness can be greater (e.g. 0.5 - 15 µm).

Fig. 5 illustrates a substrate 50 formed into configuration for use as a lead frame for an integrated circuit (IC). The substrate 50 includes a paddle 52 on which the IC is to be mounted and the leads 53 on which the IC is to be bonded. Dam bars 54 interconnect the leads before packaging. After the integrated circuit is bonded and a packaging medium has been applied over an area shown in phantom lines 55, the dam bars 54 are trimmed away.

The substrate of the lead frame can a copper alloy such as alloy No. 151 (99.9 wt. % Cu, 0.1% Zr) or alloy No. 194 (97.5 wt. % Cu, 2.35% Fe, 0.03% P, 0.12% Zn). Other conductive metals and alloys such as alloy No. 42 (42 wt. % Ni, 58% Fe) can also be used.

An integrated circuit 56 is mounted and bonded to the substrate, and the substrate is coated by the process illustrated in Fig. 2.

## Claims

1. A coated metal article comprising:
a metal substrate (10);
overlying the substrate a multilayer surface finish (11) comprising a layer of tin or tin alloy (13) and a metal outer layer (14) **characterised in that** the metal outer layer comprises a metal selected from comprising palladium, iridium, rhodium, ruthenium, platinum, copper, silver, bismuth or an alloy thereof

2. The article of claim 1 further comprising an underlayer (12) of metal selected from the group consisting of nickel, nickel alloy, cobalt and cobalt alloy.

3. The article of claim 1 further comprising an underlayer wherein the underlayer (12) is selected from the group consisting of nickel-phosphorus, nickel-phosphorus-tungsten and cobalt-phosphorus.

4. The article of claim 1 wherein the metal substrate (10) comprises a metal selected from copper, copper alloy, iron, iron alloy, nickel or nickel alloy.

5. The article of claim 1 wherein the layer of tin or tin alloy (13) has a thickness in the range 0.5 - 10 µm and the outer metal layer (14) has a thickness in the range 5 - 10,000 angstroms.

6. An electrical connector (30) comprising a coated metal article in accordance with claim 1.

7. A lead frame for an integrated circuit comprising a coated metal article in accordance with claim 1.

## Patentansprüche

1. Beschichteter Metallartikel, der
ein Metallsubstrat (10) umfasst,
wobei über dem Substrat ein Mehrschichtoberflächenüberzug (11) liegt, der eine Schicht (13) aus Zinn oder Zinnlegierung und eine äußere Metallschicht (14) umfasst, **dadurch gekennzeichnet, dass** die äußere Metallschicht ein Metall ausgewählt aus Palladium, Iridium, Rhodium, Ruthenium, Platin, Kupfer, Silber, Wismut oder einer Legierung davon umfasst.

2. Artikel nach Anspruch 1, der des Weiteren eine Unterschicht (12) aus Metall ausgewählt aus der Gruppe bestehend aus Nickel, Nickellegierung, Kobalt und Kobaltlegierung umfasst.

3. Artikel nach Anspruch 1, der des Weiteren eine Unterschicht umfasst, wobei die Unterschicht (12) ausgewählt ist aus der Gruppe bestehend aus Nickel-Phosphor, Nickel-Phosphor-Wolfram und Kobalt-Phosphor.

4. Artikel nach Anspruch 1, bei dem das Metallsubstrat (10) ein Metall ausgewählt aus Kupfer, Kupferlegierung, Eisen, Eisenlegierung, Nickel oder Nickellegierung umfasst.

5. Artikel nach Anspruch 1, bei dem die Schicht (13) aus Zinn oder Zinnlegierung eine Dicke im Bereich von 0,5 bis 10 µm hat und die äußere Metallschicht (14) eine Dicke im Bereich von 5 bis 10 000 Å hat.

6. Elektrisches Anschlussstück (30), das einen beschichteten Metallartikel nach Anspruch 1 umfasst.

7. Leitungsrahmen für einen integrierten Schaltkreis, der einen beschichteten Metallartikel nach Anspruch 1 umfasst.

## Revendications

1. Article métallique à revêtement, comprenant :
un substrat métallique (10) ;
le recouvrement du substrat par une finition de surface multicouche (11) comprenant une couche d'étain ou d'un alliage d'étain (13) et une couche métallique extérieure (14), **caractérisé en ce que** la couche métallique extérieure comprend un métal choisi parmi le groupe comprenant le palladium, l'iridium, le rhodium, le ruthénium, le platine, le cuivre, l'argent, le bismuth ou un alliage de ceux-ci.

2. Article selon la revendication 1, comprenant en outre une sous-couche (12) de métal choisi parmi le groupe constitué du nickel, d'un alliage de nickel, du cobalt et d'un alliage de cobalt.

3. Article selon la revendication 1, comprenant en outre une sous-couche, dans lequel la sous-couche (12) est choisie parmi le groupe constitué du nickel-phosphore, le nickel-phosphore-tungstène et le cobalt-phosphore.

4. Article selon la revendication 1, dans lequel le substrat métallique (10) comprend un métal choisi parmi le cuivre, un alliage de cuivre, le fer, un alliage de fer, le nickel ou un alliage de nickel.

5. Article selon la revendication 1, dans lequel la couche d'étain ou d'alliage d'étain (13) présente une épaisseur dans la plage de 0,5 à 10 µm et la couche métallique extérieure (14) présente une épaisseur dans la plage de 5 à 10 000 angstrôms.

6. Connecteur électrique (30) comprenant un article métallique à revêtement selon la revendication 1.

7. Grille de connexion pour un circuit intégré comprenant un article métallique à revêtement selon la revendication 1.
